# EUROPÄISCHE PATENTSCHRIFT

(11) **EP 3 321 304 B1**
(45) Veröffentlichungstag und Bekanntmachung des Hinweises auf die Patenterteilung: **19.06.2019**
(21) Anmeldenummer: 17156421.4
(22) Anmeldetag: 16.02.2017
(51) Int. Cl.: C08G 77/06, C08G 77/10, C08L 83/04

(54) **MISCHUNGEN ZYKLISCHER-VERZWEIGTER SILOXANE VOM D/T-TYP UND DEREN FOLGEPRODUKTE**
MIXTURES OF CYCLIC BRANCHED D/T-TYPE SILOXANES AND THEIR ENSUING PRODUCTS
MÉLANGES DE SILOXANES RAMIFIÉS-CYCLIQUES DE TYPE D/T ET LEURS PRODUITS SECONDAIRES

(30) Priorität: 15.11.2016 EP 16198809
(43) Veröffentlichungstag der Anmeldung: 16.05.2018
(73) Patentinhaber: Evonik Degussa GmbH, 45128 Essen (DE)
(72) Erfinder: Knott, Wilfried, 45355 Essen (DE); Dudzik, Horst, 45326 Essen (DE)

(56) Entgegenhaltungen:
- US-A1- 2010 239 771
- US-A1- 2011 076 409

## Beschreibung

Die Erfindung betrifft ein Verfahren zur Herstellung von Mischungen zyklischer-verzweigter Siloxane vom D/T-Typ, die Mischungen zyklischer-verzweigter Siloxane des D/T-Typs selbst sowie die Verarbeitung dieser Siloxane zu funktionalisierten verzweigten Siloxanen und/oder verzweigten Siliconölen.

Als Referenz zu der im Rahmen dieser Schrift verwendeten M-, D-, T-, Q-Nomenklatur zur Beschreibung der Baueinheiten von Organopolysiloxanen sei W. Noll, Chemie und Technologie der Silicone, Verlag Chemie GmbH, Weinheim (1960), Seite 2 ff. angeführt.

Bei der Herstellung organomodifizierter Siloxane, insbesondere verzweigter funktionstragender Siloxane sieht man sich häufig der Schwierigkeit gegenüber, dass konkurrierende Prozesse gleichzeitig in der Reaktionsmatrix stattfinden, die die Qualität des angestrebten Produktes negativ beeinflussen können.

Kondensation und Äquilibrierung zählen zu diesen konkurrierenden Prozessen, die je nach synthetischer Fragestellung gesondert zu berücksichtigen sind. Eine große Herausforderung stellt die gleichmäßige Verteilung von Verzweigungsstellen entlang einer Siloxankette dar, entsprechend einer Vermeidung von T-strukturierten Domänen. Wie man der Literatur entlehnen kann, ist das Aufbrechen homologer, aus T-Einheiten bestehender Siloxanketten gerade unter Säurekatalyse schwierig und somit bei Präsenz empfindlicher funktioneller Gruppen de facto nicht zu leisten. Zum Reaktivitätsverhalten von M-, D- und T-Einheiten sei auf M.A. Brook, "Silicon in Organic, Organometallic and Polymer Chemistry", John Wiley & Sons, Inc., New York (2000), S. 264 ff. verwiesen.

Insbesondere bei der Herstellung von reaktiven SiH-Gruppen tragenden, verzweigten Siloxanen sind darum stets erhebliche Anstrengungen zu unternehmen, die Forderung nach einer möglichst statistischen Gleichverteilung von Siloxaneinheiten mit der Forderung nach dem weitestgehenden Erhalt des wertvollen, am Silizium gebundenen Wasserstoffs in Einklang zu bringen.

Polyorganosiloxane werden nach dem Stand der Technik durch Hydrolyse und Kondensation ausgehend von gemischt substituierten Methyl-Chlor-Wasserstoff-Silanen hergestellt. Eine direkte hydrolytische Kondensation von wasserstoffhaltigen Silanen, wie z. B. Dimethylmonochlorsilan oder Methyldichlorsilan, wird beispielsweise in der US 2,758,124 beschrieben. Man trennt darin die sich bei der Hydrolyse separierende Siloxanphase von der salzsauren Wasserphase ab. Da dieser Prozess anfällig für Vergelungen der Wasserstoffsiloxane ist, beschreibt die DE 11 25 180 ein verbessertes Verfahren unter Nutzung einer organischen Hilfsphase, bei dem das gebildete Wasserstoffsiloxan in einem organischen Lösungsmittel als separate Phase gelöst vorliegt und nach Abtrennung von der sauren Wasserphase und Abdestillation des Lösungsmittels beständig gegen Vergelung ist. Eine weitere Prozessverbesserung im Hinblick auf einen minimierten Lösungsmitteleinsatz beschreibt die EP 0 967 236 und führt in ihrer Lehre aus, vorerst nur geringe Wassermengen in der hydrolytischen Kondensation der Organochlorsilane einzusetzen, so dass im ersten Schritt Chlorwasserstoff gasförmig ausgetrieben wird und als Wertstoff unmittelbar weiteren Verwendungszwecken zugeführt werden kann.

Verzweigte organomodifizierte Polysiloxane können durch eine Vielzahl an Strukturen beschrieben werden. Generell muss unterschieden werden zwischen einer Verzweigung oder Vernetzung, die über die organischen Substituenten eingebracht wird und einer Verzweigung oder Vernetzung innerhalb der Siliconkette. Organische Vernetzer zur Verknüpfung SiH-Gruppen tragender Siloxangerüste sind beispielsweise α,ω-ungesättigte Diolefine, Divinyl-Verbindungen oder Diallyl-Verbindungen, wie beispielsweise in US 6,730,749 oder EP 0 381 318 beschrieben. Diese der Äquilibrierung nachgeschaltete Vernetzung durch Platin-katalysierte Hydrosilylierung bedeutet einen zusätzlichen Verfahrensschritt, bei dem sowohl intramolekulare Verknüpfungen als auch intermolekulare Verknüpfungen stattfinden können. Die Produkteigenschaften werden zudem stark beeinflusst von den unterschiedlichen Reaktivitäten der zu Peroxidbildung neigenden, niedermolekularen organischen, difunktionellen Verbindungen.

Eine multiple Vernetzung des Siliconblocks eines organomodifizierten Polysiloxans mit dem organischen Blockcopolymer kann auf verschiedene Arten erfolgen. Die EP 0 675 151 beschreibt die Herstellung eines Polyethersiloxans durch Hydrosilylierung eines Wasserstoffsiloxans mit einem Unterschuss an hydroxyfunktionellem Allylpolyether, bei der nicht umgesetzte SiH-Funktionen unter Zugabe von Natriummethylat mit den Hydroxylgruppen der Polyethersubstituenten über eine SiOC-Bindung verknüpft werden. Der Molmassenaufbau führt zu einer breiten Streuung der Produkteigenschaften, wie z. B. der Viskosität. Einen ähnlichen Ansatz zum Aufbau verzweigter Systeme beschreibt die US 4,631,208, bei der hydroxyfunktionelle Polyethersiloxane mittels Trialkoxysilanen quervernetzt werden. Beide Methoden führen zu einer intermolekularen Vernetzung der Polyethersiloxane mit sowohl schwierig zu steuerndem Molmassenaufbau als auch damit einhergehenden, unvorhersehbaren Viskositätsanstiegen. Man erhält bei Verfolgung der vorgenannten Methoden keine Verzweigung innerhalb des Siloxanteils bei konstanter Molekularmasse, sondern eine Quervernetzung zu makromolekularen Multiblockcopolymeren.

Eine Verzweigung innerhalb der Siloxankette muss daher bereits bei der Herstellung des Wasserstoffsiloxans erfolgen, um die beschriebenen Nachteile der Quervernetzung zu umgehen. Verzweigungen innerhalb der Siloxankette bedingen den synthetischen Einbau von trifunktionellen Silanen, wie z. B. Trichlorsilanen oder Trialkoxysilanen.

Wie dem Fachmann bekannt ist, steigt die Hydrolysegeschwindigkeit der Organochlorsilane in folgender Reihe (C. Eaborn, Organosilicon Compounds, Butterworths Scientific Publications, London I960, S. 179):
SiCl₄ > RSiCl₃ » R₂SiCl₂ > R₃SiCl.

Daher besteht bei den Hydrolyse und Kondensationsreaktionen von Trichlorsilanen eine erhöhte Tendenz zur Bildung hochvernetzter Gele im Vergleich zu den langsamer verlaufenden Hydrolyse und Kondensationsreaktionen von difunktionellen und monofunktionellen Organochlorsilanen. Die etablierten Verfahren zur Hydrolyse und Kondensation von Dichlor- und Monochlorsilanen sind daher nicht ohne weiteres auf Trichlorsilane übertragbar, sondern es müssen Umwege über Mehrstufenprozesse beschritten werden.

Aufbauend auf diese Erkenntnis, muss auch die Herstellung von einfach verzweigten Wasserstoffsiloxanen durch Einbau von maximal einem trifunktionellen Monomer pro Siloxankette gemäß dem Stand der Technik zweistufig durchgeführt werden. In einem ersten Schritt wird ein trifunktionelles, niedermolekulares Wasserstoffsiloxan durch Hydrolyse und Kondensation aus 1, 1, 3, 3-Tetramethyldisiloxan und Methyltriethoxysilan hergestellt, wie z.B. die DE 37 16 372 lehrt. Erst in einem zweiten Schritt kann dann eine Äquilibrierung mit cyclischen Siloxanen zu höheren Molgewichten erfolgen, wie die DE 10 2005 004676 ausführt. Zur weiteren Umsetzung - und daher erst in einem dritten Schritt - kann das so hergestellte, einfach verzweigte Wasserstoffsiloxan nach den an sich bekannten Methoden zur Funktionalisierung SiH-Gruppen aufweisender Siloxanverbindungen mit organischen Substituenten versehen werden.

Zur Synthese mehrfach verzweigter Wasserstoffsiloxane, die per Definition mehr als ein trifunktionelles Monomer pro Siloxankette aufweisen, finden sich im Stand der Technik ebenfalls zweistufige Synthesen. Prinzipiell hat man die Möglichkeit von Wasserstoffsiloxanen auszugehen und die SiH-Funktionen unter Zugabe von Wasser und Edelmetallkatalysator dehydrogenativ in Silanole umzuwandeln, die anschließend wiederum mit Wasserstoffsiloxanen kondensiert werden. Beschrieben wird diese Vorgehensweise in US 6,790,451 und in EP 1 717 260. Abgesehen von den Kosten der Edelmetallkatalyse erschwert die schlechte Lagerstabilität der zu Autokondensation neigenden Silanole eine reproduzierbare, kontrollierte Prozessführung.

Eine weitere, in US 6,790,451 beschriebene Möglichkeit besteht in der Herstellung eines Copolymerisats aus Trichlormethylsilan oder Trialkoxymethylsilan mit Hexamethyldisiloxan oder Trimethylchlorsilan, dort auch MT-Polymer genannt, welches in einem zweiten Schritt gemeinsam mit einem Polydimethyl (methylhydrogen) siloxancopolymer äquilibriert wird. Die Herstellung solcher MT-Polymere erfordert den Einsatz starker Basen oder starker Säuren teils in Kombination mit hohen Reaktionstemperaturen und bringt Präpolymere derart hoher Viskosität hervor, dass deren Neutralisation beträchtlich erschwert und somit die Weiterverarbeitung zu Endprodukten konstanter Zusammensetzung und Qualität signifikant eingeschränkt ist.

Gemäß EP 0 675 151 wird zuerst die Hydrolyse und Kondensation des SiH-freien, verzweigten Siliconpolymers in Xylol derartig durchgeführt, dass man mit einem großen Überschuss an Hexamethyldisiloxan den Endverschluss des Vorkondensates durchführt und im zweiten Schritt die Äquilibrierung mit Methylhydrogenpolysiloxan zu einem verzweigten Wasserstoffsiloxan vornimmt (Herstellvorschrift 6, ibid.). Alternativ stellt die Lehre der EP 0 675 151 auf eine Fahrweise zur Herstellung nicht SiHfunktioneller verzweigter Siloxane ab, die lediglich eine Teilkondensation des eingesetzten Methyltrichlorsilans beinhaltet (Herstellvorschrift 7, ibid.). Diese beiden Strategien des Vorgehens adressieren jedoch das Bedürfnis nach einer universell nutzbaren Herstellmethode für verzweigte Siloxane nicht.

Die WO2009065644 (A1) lehrt ein Verfahren zur Herstellung von verzweigten SiH-funktionellen Siloxanen durch Umsetzung einer Mischung enthaltend a) ein oder mehrere SiH-funktionelle Siloxane, b) ein oder mehrere SiH-Funktions-freie Siloxane und c) ein oder mehrere Trialkoxysilane unter Zugabe von Wasser und in Anwesenheit von mindestens einem Brönstedt-sauren Katalysator, wobei die Umsetzung in einem Verfahrensschritt durchgeführt wird. Die technischen Grenzen dieses Prozesses im Hinblick auf den Erhalt der in das System hineingebrachten SiH-Funktionalität werden aus der dortigen Offenbarung deutlich. Es zeigt sich die Notwendigkeit, für empfindliche SiH-funktionelle verzweigte Siloxanstrukturen mit mindestens zwei sauren Katalysatoren (Trifluormethansulfonsäure vs. Trifluormethansulfonsäure und sulfonsaures lonenaustauscherharz, ibid. Beispiele 5 und 6) arbeiten zu müssen, wodurch das Verfahren in seiner technischen Realisierung aufwendig und kostspielig wird.

Über die mögliche Existenz ausschließlich aus D- und T- Einheiten aufgebauter Siloxane wurde in der Literatur bereits spekuliert. Wie W. Noll in Chemie und Technologie der Silicone, Weinheim (1960), Seiten 181-182 ausführt, geht auf D.W. Scott (J. Am. Chem. Soc. 68, 356, 1946) der Hinweis zurück, dass sich aus einer extrem verdünnten Co-Hydrolyse von Dimethyldichlorsilan und Methyltrichlorsilan mit anschließender thermischer Umlagerung bicyclische Verbindungen von D- und T- Einheiten aufweisenden Siloxanen herleiten. Aus dem viskosen Co-Hydrolysat konnten bei Sumpftemperaturen zwischen 350 und 600°C Isomere in Mengen von noch nicht einmal 1% isoliert und danach kryoskopisch sowie elementaranalytisch mit sehr großen Unsicherheiten behaftet beschrieben werden. Scott spekuliert, dass seine D-T-Strukturen aufweisenden Verbindungen unmittelbar miteinander und nicht über D-Einheiten verknüpfte T-Strukturelemente enthalten. Die Interpretation der Ergebnisse beruht bei Scott auf der Prämisse, dass alle im Co-Hydrolysat enthaltenen SiC-Bindungen die von ihm gewählte, drastische thermische Behandlung überstehen.

Makarova et al. (Polyhedron Vol. 2, No. 4, 257-260 (1983)) haben 10 oligomere Methylsiloxane mit cyclischen und linearen Segmenten durch die gezielte, kalte Kondensation von SiCl-Gruppen enthaltenden mit SiOH-Gruppen aufweisenden Siloxanen in Gegenwart organischer Amine wie Triethylamin oder Anilin in Benzol oder Diethylether als Solventien hergestellt, die ausgefällten Aminhydrochloride abgetrennt, die rohen Reaktionsprodukte gewaschen und danach fraktioniert destilliert. Anschließend wurden die bicyclischen Methylsiloxane der Pyrolyse bei Temperaturen zwischen 400 und 600°C unterworfen und die Pyrolyseprodukte gaschromatographisch charakterisiert. Die im Rahmen dieser Studie eingesetzten niedermolekularen Verbindungen wie z.B. Hydroxynonamethylcyclopentasiloxan, Hydroxyheptamethylcyclotetrasiloxan, Dihydroxytetramethyldisiloxan sind aus Sicht der im industriellen Maßstab betriebenen Silikonchemie als rein akademische Exoten zu betrachten.

Insbesondere sind die auf diesem Wege synthetisierten, Molmassen-definierten, kettenreinen Siloxanverbindungen des D/T-Typs nicht geeignet für die Herstellung von organomodifizierten Siloxanen, die Eingang in anspruchsvolle technische Anwendungen wie z.B. in die PU-Schaumstabilisierung oder in die Entschäumung von Kraftstoffen, etc. nehmen. Wirkstoffe, die ein derartiges Anwendungsgebiet effektiv adressieren, sind stets von einer breiten Oligomerverteilung umfassend hohe, mittlere und niedrige Molmassen gekennzeichnet, da den darin enthaltenen Oligomeren in Abhängigkeit von ihrer Molmasse und damit ihres Diffusionsverhaltens sehr oft differenzierte tensidische Aufgaben in unterschiedlichen Zeitfenstern des jeweiligen Prozesses zuzuschreiben sind. Speziell im Falle der verzweigten organomodifizierten Siloxane sind dem eingangs diskutierten Reaktivitätsverhalten von M-, D- und T-Einheiten geschuldet eine gute Oligomerverteilung kombiniert mit einer möglichst statistischen Gleichverteilung von Siloxaneinheiten in den individuellen Molekülen jedoch nur dann zu erzielen, wenn das eingesetzte Startmaterial vom D/T-Typ bereits selbst einer Verteilungsfunktion genügt. Das gilt umso mehr, wenn die Organomodifizierung über ein SiH-Gruppen tragendes Intermediat erfolgt
US2010/239771 und US2011/076409 offenbaren ein Verfahren zur Herstellung von D/T-Polysiloxanen durch Hydrolyse von Methyltrimethoxysilan, Octamethylcyclotetrasiloxan und Octyltriethoxysilan in Anwesenheit von Trifluormethansulfonsäure bei 68-70 °C.

Bei Würdigung dieses Standes der Technik zeichnet sich keine wirkliche Lösung zur Herstellung verzweigter organomodifizierter Siloxane ab.

Erstaunlicherweise wurde nun gefunden, dass man die geschilderte Problematik dadurch lösen kann, dass man den Herstellprozess zur Gewinnung verzweigter organomodifizierter Siloxane so durchführt, dass man
in einem ersten Schritt die Herstellung von Mischungen zyklischer-verzweigter, ausschließlich D- und T-Einheiten aufweisender Siloxane, die im Wesentlichen keine funktionellen Gruppen aufweisen, betreibt, wobei ein Trialkoxysilan in einem Lösemittel mit Siloxancyclen und/oder, vorzugsweise oder, α,ω-Dihydroxy-polydimethylsiloxan unter Zugabe von Wasser und in Anwesenheit von mindestens einem sauren Katalysator umgesetzt wird, mit der Maßgabe, dass der mit ²⁹Si-NMR-Spektroskopie bestimmbare summarische Anteil der in der Siloxanmatrix vorhandenen D- und T-Einheiten, die Si-Alkoxy- beziehungsweise SiOH-Gruppen aufweisen kleiner gleich 2 Molprozent ist, und in einem zweiten Schritt die zyklischen-verzweigten Siloxane mit Silanen und/oder Siloxanen, insbesondere mit funktionellen Silanen und/ oder Siloxanen, sauer äquilibriert. Als Lösemittel wird ein inertes, mit Wasser nicht mischbares Silicium-freies Lösungsmittel aus der Gruppe umfassend die isomeren Xylole, Alkylaromaten, wie vorzugsweise Toluol und/oder Cycloaliphaten, wie vorzugsweise Cyclohexan aber auch Ethylcarbonat eingesetzt.

Damit ergeben sich die folgenden Gegenstände der Erfindung.

Ein Gegenstand der Erfindung sind Mischungen zyklischer-verzweigter, ausschließlich D- und T-Einheiten aufweisender Siloxane mit der Maßgabe, dass der mit ²⁹Si-NMR-Spektroskopie bestimmbare summarische Anteil der in der Siloxanmatrix vorhandenen D- und T-Einheiten, die Si-Alkoxy- und/oder SiOH-Gruppen aufweisen, ≤ 2 Molprozent ist, ansonsten ohne funktionelle Gruppen.

Ein weiterer Gegenstand der Erfindung ist Verfahren zur Herstellung von Mischungen zyklischer-verzweigter, ausschließlich D- und T-Einheiten aufweisender Siloxane ohne funktionelle Gruppen mit der Maßgabe, dass der mit ²⁹Si-NMR-Spektroskopie bestimmbare summarische Anteil der in der Siloxanmatrix vorhandenen D- und T-Einheiten, die Si-Alkoxy- und/oder SiOH-Gruppen aufweisen ≤ 2 Molprozent ist, ansonsten ohne funktionelle Gruppen, wobei ein Trialkoxysilan in einem Lösemittel mit Siloxancyclen und/oder, vorzugsweise oder, α,ω-Dihydroxy-polydimethylsiloxan unter Zugabe von Wasser und in Anwesenheit von mindestens einem sauren Katalysator umgesetzt wird. Als Lösemittel wird ein inertes, mit Wasser nicht mischbares Silicium-freies Lösungsmittel aus der Gruppe umfassend die isomeren Xylole, Alkylaromaten, wie vorzugsweise Toluol und/oder Cycloaliphaten, wie vorzugsweise Cyclohexan aber auch Ethylcarbonat eingesetzt.

Noch ein weiterer Gegenstand der Erfindung ist ein Verfahren zur Herstellung verzweigter, organomodifizierter Siloxane, wobei in einem ersten Schritt zyklische-verzweigte Siloxane bereitgestellt werden, vorzugsweise Mischungen zyklischer-verzweigter, ausschließlich D- und T-Einheiten aufweisender Siloxane mit der Maßgabe, dass der mit ²⁹Si-NMR-Spektroskopie bestimmbare summarische Anteil der in der Siloxanmatrix vorhandenen D- und T-Einheiten, die Si-Alkoxy- und/oder SiOH-Gruppen aufweisen ≤ 2 Molprozent ist, ansonsten ohne funktionelle Gruppen,
und in einem zweiten Schritt die zyklischen-verzweigten Siloxane mit Silanen und/oder Siloxanen sauer äquilibriert werden.

Die Erfindung und ihre Gegenstände werden nachfolgend genauer erläutert.

Bei den erfindungsgemäßen Mischungen zyklischer-verzweigter, ausschließlich D- und T-Einheiten aufweisender Siloxane liegt im Rahmen einer bevorzugten Ausführungsform der Erfindung das Verhältnis von D- zu T-Einheiten zwischen 10 : 1 und 3 : 1, bevorzugt zwischen 6 : 1 und 4 : 1.

Gemäß einer weiteren bevorzugten Ausführungsform der Erfindung liegt das Molmassenverhältnis M_{w}/Mₙ der Mischung im Bereich 2 < M_{w}/Mₙ < 50. Diese Parameter können bestimmt werden aus toluolischen Lösungen der Siloxane durch die Gel-Permeations-Chromatographie (GPC), die unter Nutzung eines Brechungsindex-Detektors im Abgleich gegen einen Polystyrol-Standard die Bestimmung von deren mittleren Molmasse M_{w} und deren Molmassenverteilung M_{w}/Mₙ gestattet.

Wenn die Mischungen zyklisch verzweigter, ausschließlich D- und T-Einheiten aufweisender Siloxane, wie zuvor beschrieben, sich dadurch auszeichnen, dass sich die verzweigende T-Einheit von Alkyltrialkoxysilanen und/oder, vorzugsweise oder, Phenyltrialkoxysilanen herleitet, so liegt eine weitere bevorzugte Ausführungsform der Erfindung vor.

Ebenso liegt eine bevorzugte Ausführungsform der Erfindung vor, wenn sich die verzweigende T-Einheit von Methyltriethoxysilan herleitet.

Die vorgenannten erfindungsgemäßen Mischungen können insbesondere über das erfindungsgemäße Verfahren zur Herstellung von Mischungen zyklischer-verzweigter, ausschließlich D- und T-Einheiten aufweisender Siloxane erhalten werden, indem ein Trialkoxysilan in dem Lösemittel mit Siloxancyclen und/oder, vorzugsweise oder, α,ω-Dihydroxy-polydimethylsiloxan unter Zugabe von Wasser und in Anwesenheit von mindestens einem sauren Katalysator umgesetzt wird. Dies umfasst Hydrolyse und Kondensation unter sauer äquilibrierenden Bedingungen.

Nachfolgend wird eine zwar bevorzugte, aber dennoch nur beispielgebende und deshalb nicht den Erfindungsgegenstand einschränkend festlegende Vorgehensweise genauer erläutert:
Bevorzugt können Trialkoxysilan und Siloxancyclen in einem geeigneten Lösemittel (wie z.B. Toluol oder Cyclohexan) vorgelegt werden und mit einer katalytischen Menge einer Äquilibriersäure (z.B. 0,2 m-% Trifluormethansulfonsäure bezogen auf die Masse der Edukte ohne Solvens) versetzt werden.

Man äquilibriert zum Beispiel in toluolischer Phase 4 Stunden bei 60°C vor, fügt dann ein Wasser/ Ethanol-Gemisch (100% H₂O-Überschuss bezogen auf die zu kondensierenden Gruppen) hinzu und erwärmt das Reaktionsgemisch z.B. 4 Stunden lang auf Rückflusstemperatur (ca. 80°C). Der Rückflusskühler wird vorzugsweise durch einen Wasserabscheider ersetzt und die Reaktionsmischung wird innerhalb einer Stunde auf ca. 100°C erhitzt, wobei mit voranschreitendem Austrag der Flüchtigen die Sumpftemperatur stetig ansteigt. Bei vollständigem Auskreisen des überschüssigen Wassers wird das Reaktionsgemisch klar.

Nach Abkühlen auf z.B. ca. 70°C wird eine zweite Portion eines Wasser/ Ethanol-Gemisches (ca. 1/3 der im Voräquilibrierschritt verwendeten Menge) hinzugefügt und das Reaktionsgemisch 1 Stunde lang auf Rückflusstemperatur (ca. 80°C) erhitzt. Der Rückflusskühler wird durch einen Wasserabscheider ersetzt und die Reaktionsmischung wird auf ca. 100°C erhitzt. Die Sumpftemperatur steigt mit voranschreitendem Austrag der Flüchtigen stetig an. Zum Zeitpunkt des vollständigen Auskreisens überschüssigen Wassers wird das Reaktionsgemisch klar.

Der Reaktionsansatz wird auf ca. 60°C abgekühlt und unter Rühren zum Zwecke der Neutralisation mit 4 m-% NaHCO₃ versetzt. Nach ca. 30 Minuten wird der Reaktionsansatz durch eine Filtration vom Feststoff befreit. Man destilliert das Lösungsmittel (Toluol) bei 70°C und einem angelegten Hilfsvakuum von 1 mbar ab.

Erhalten werden klare, farblose, niedrig-viskose Flüssigkeiten, deren zugehöriges ²⁹Si-NMR-Spektrum die dominierende Präsenz von D- und T-Einheiten belegt. Das Verhältnis von D- zu T-Einheiten liegt vorzugsweise zwischen 10 : 1 und 3 : 1, bevorzugt zwischen 6 : 1 und 4 : 1. Man findet spektroskopisch, wenn überhaupt noch und allenfalls mit Signalintensitäten von ca. 0,5 bis 1% Si-Alkoxy- bzw. SiOH-Gruppen. Der bestimmbare summarische Anteil der in der Siloxanmatrix vorhandenen D- und T-Einheiten, die Si-Alkoxy- beziehungsweise SiOH-Gruppen aufweisen, liegt jedenfalls ≤ 2 Molprozent.

Die vorgenannte beispielgebende Vorgehensweise führt zu hervorragenden Resultaten mit Blick auf das erfindungsgemäß zu verwirklichende Ziel.

Als Lösungsmittel wird ein inertes, mit Wasser nicht mischbares Silicium-freies Lösungsmittel aus der Gruppe umfassend die isomeren Xylole, Alkylaromaten, wie vorzugsweise Toluol und/oder Cycloaliphaten, wie vorzugsweise Cyclohexan aber auch Ethylcarbonat eingesetzt. Beim Einsatz von Massenverhältnissen von Lösemittel zum Siloxan von 1:1 bis 5:1 liegt eine bevorzugte Ausführungsform der Erfindung vor.

Abhängig vom angestrebten D/T-Verhältnis wird die Lösemittelmenge vorzugsweise so bemessen, dass man über den Verlauf der Reaktion hinweg gut handhabbare Viskositäten sicherstellt. Bevorzugt werden Massenverhältnisse von Lösemittel zum Siloxan von 1 : 1 bis 5 : 1 gewählt. Insbesondere bei D/T-Verhältnissen, die kleiner als 5 : 1 sind, kann eine nicht angepasste Lösemittelmenge zu Viskositätsanstiegen bis hin zur Vergelung führen. Andererseits gestatten wenige Vorversuche (siehe hierzu Beispiel 4 (vergeltes System) und Beispiel 5 (handhabbares System)) bei einmal gewähltem Lösemittel, das optimale Massenverhältnis von Lösemittel zum Siloxan festzulegen.

Als saurer Katalysator kann in dem erfindungsgemäßen Verfahren entsprechend einer bevorzugten Ausführungsform der Erfindung
(a) para-Toluolsulfonsäure, Trifluormethansulfonsäure, Trichloressigsäure, Schwefelsäure, Perchlorsäure, Phosphorsäure und/oder Hexafluorphosphorsäure eingesetzt werden, vorzugsweise in Mengen von 0,1 bis 2,0 Gewichtsprozent, besonders bevorzugt in Mengen von 0,15 bis 1,0 Gewichtsprozent, jeweils bezogen auf den Silicium enthaltenden Anteil der Reaktionsmatrix,
   oder
(b) ein sulfonsaures, makrovernetztes lonenaustauscherharz, vorzugsweise in Mengen von 1,0 bis 10,0 Gewichtsprozent, besonders bevorzugt in Mengen von 2,0 bis 6,0 Gewichtsprozent jeweils bezogen auf den Silicium enthaltenden Anteil der Reaktionsmatrix,
eingesetzt werden. Geeignete saure Katalysatoren werden weiter unten noch genauer beschrieben.

Wird die Umsetzung bei Temperaturen im Bereich von 10°C bis 150°C, vorzugsweise 20°C bis 120°C, insbesondere von 40°C bis 110°C durchgeführt, liegt eine weitere bevorzugte Ausführungsform der Erfindung vor.

Wird ein mindestens 100%-iger H₂O-Überschuss bezogen auf die zu kondensierenden Gruppen eingesetzt, liegt ebenfalls eine weitere bevorzugte Ausführungsform der Erfindung vor.

Umfasst die Umsetzung einen Voräquilibrierschritt bei Temperaturen von T>40°C, gefolgt von einer durch Wasserzugabe eingeleiteten Kondensation bei Temperaturen von T>60°C, wobei die Wasserzugabe in einer Portion, in mehreren Portionen oder fortlaufend erfolgt, liegt wiederum eine weiter bevorzugte Ausführungsform der Erfindung vor.

Wie weiter oben bereits dargelegt, ist ein weiterer Gegenstand der Erfindung ein Verfahren zur Herstellung verzweigter, organomodifizierter Siloxane, wobei in einem ersten Schritt zyklische-verzweigte Siloxane bereitgestellt werden, vorzugsweise Mischungen zyklischer-verzweigter, ausschließlich D- und T-Einheiten aufweisender Siloxane mit der Maßgabe, dass der mit ²⁹Si-NMR-Spektroskopie bestimmbare summarische Anteil der in der Siloxanmatrix vorhandenen D- und T-Einheiten, die Si-Alkoxy- und/oder SiOH-Gruppen aufweisen kleiner gleich 2 Molprozent ist, ansonsten ohne funktionelle Gruppen,
und in einem zweiten Schritt die zyklischen-verzweigten Siloxane mit Silanen und/oder Siloxanen, vorzugsweise funktionellem Silan und/oder Siloxan, sauer äquilibriert werden.

Unter funktionelles Silan und/oder Siloxan werden alle diejenigen ein und/ oder mehrere Siliziumatome umfassenden Verbindungen verstanden, die auf dem Wege der sauren Äquilibrierung in das Copolymer (entspricht zyklische-verzweigte Siloxane) eingebaut werden können. Insbesondere weisen diese sauer äquilibrierbaren Silane bzw. Siloxane neben gegebenenfalls vorhandenen Wasserstoff-, Alkyl- bzw. Aryl- oder Vinylsubstituenten auch noch Hydroxy-, Alkoxy- und Chlor-Substituenten auf. Ebenfalls eignen sich hier funktionelle Silane bzw. Siloxane, die saure Gruppierungen wie Toluolsulfonat-, Trifluormethylsulfonat- und Sulfat-Reste tragen.

Als Sonderfall werden durch das saure Co-Äquilibrieren des im ersten Schritt gewonnenen zyklischen-verzweigten Siloxans vom D/T-Typ mit Hexamethyldisiloxan und/ oder, vorzugsweise oder, Polydimethylsiloxanen verzweigte Siliconöle zugänglich. Ein entsprechendes erfindungsgemäßes Verfahren zur Herstellung verzweigter Silikonöle, wobei in einem ersten Schritt Mischungen zyklischer-verzweigter Siloxane bereitgestellt werden, wie zuvor beschrieben, und in einem zweiten Schritt die Mischungen zyklischer-verzweigter Siloxane mit Polydimethylsiloxanen oder Hexamethyldisiloxan umgesetzt werden, entspricht somit einem weiteren Gegenstand der Erfindung.

Es ist aber erfindungsgemäß stärker bevorzugt, verzweigte, organomodifizierte Siloxane bereitzustellen. Zur Erzielung solcher finalen organomodifizierten Siloxanstruktur wird eine saure Äquilibrierung mit funktionellen Silanen und/ oder Siloxanen als zweiter Schritt durchgeführt.

Als saure Katalysatoren eignen sich für beide Schritte des erfindungsgemäßen Verfahrens die nach dem Stand der Technik bekannten starken Säuren (Äquilibriersäuren) für Siloxane, also Mineralsäuren, wie beispielsweise Schwefelsäure, aber auch Sulfonsäuren, Fluoralkylsulfonsäuren wie zum Beispiel Trifluormethansulfonsäure, saure Tonerden oder saure lonenaustauscherharze, wie beispielsweise die unter den Markennamen Amberlite®, Amberlyst® oder Dowex® und Lewatit0 bekannten Produkte.

In dem erfindungsgemäßen Verfahren können sowohl natürliche Ionenaustauscher, wie beispielsweise Zeolithe, Montmorillonite, Attapulgite, Bentonite und andere Alumosilikate sowie synthetische Ionenaustauscher eingesetzt werden. Letztere sind vorzugsweise Festkörper (meist in Körnerform) mit einer dreidimensionalen, wasserunlöslichen hochmolekularen Matrix auf der Basis von Phenol-Formaldehyd-Harzen oder Copolymerisate aus Styrol-Divinylbenzol, in die zahlreiche "Ankergruppen" unterschiedlicher Acidität eingebaut sind.

Als saure Ionenaustauscher können im Rahmen der vorliegenden Erfindung unter anderem solche vorteilhaft eingesetzt werden, wie sie in EP 1 439 200 beschrieben sind.

Bevorzugt werden sulfonsaure Katalysatoren und ganz besonders bevorzugt Trifluormethan-sulfonsäure eingesetzt.

Im ersten Schritt des erfindungsgemäßen Verfahrens (das entspricht der Herstellung Mischungen zyklischer-verzweigter Siloxane wie zuvor beschrieben) können prinzipiell alle Trialkoxysilane eingesetzt werden. Als Trialkoxysilane können solche eingesetzt werden, bei denen die Alkoxyreste alle gleich, alle unterschiedlich oder teilweise gleich sind. Als Trialkoxysilane können insbesondere Triethoxysilane, vorzugsweise Methyltriethoxysilan, Alkyltriethoxysilane wie beispielsweise n-Propyltriethoxysilan, Isobutyltriethoxysilan, Pentyltriethoxysilan, Hexyltriethoxysilan, Octyltriethoxysilan, Hexadecyltriethoxysilan, n-Octadecyltriethoxysilan, halogenhaltige oder pseudohalogenhaltige Alkyltrialkoxysilane, insbesondere Alkyltriethoxysilane, wie beispielsweise Chlorpropyltriethoxysilan, Tridecafluoro-1, 1,2, 2-tetrahydrooctyltriethoxysilan, Nonafluoro-1, 1,2, 2-tetrahydrohexyltriethoxysilan, 3-Cyanopropyltriethoxysilan, Trialkoxysilane, insbesondere Triethoxysilane mit funktionellen Gruppen, wie beispielsweise 3-Methacryloxypropyltriethoxysilan, 3-Mercaptopropyltriethoxysilan, 5- (Bicycloheptenyl) triethoxysilan, Phenyltriethoxysilan, (p-Chloromethyl)phenyltriethoxysilan, N- (3-Triethoxysilylpropyl) -4, 5-dihydroimidazol oder Dihydro-3- [3- (triethoxysilyl)propyl] furan-2, 5-dion, eingesetzt werden. Es kann vorteilhaft sein, wenn organisch funktionalisierte Trialkoxysilane als Verzweigungseinheit eingesetzt werden (einäquilibriert werden).

Zur Funktionalisierung dieser zyklischen-verzweigten Siloxane, wie weiter oben genauer beschrieben, im zweiten Schritt eignen sich prinzipiell alle sauer äquilibrierbaren Siliciumverbindungen, bevorzugt Silane und/ oder Siloxane, die für eine saure Äquilibrierung eingesetzt werden können.

Als Silane und/oder Siloxane können alle sauer äquilibrierbaren Siliciumverbindungen eingesetzt werden, wobei als Silane insbesondere, Diethoxydimethylsilan, Trimethylalkoxysilane sowie Dimethyldichlorsilan eingesetzt werden, und wobei als Siloxane insbesondere Tetramethyldisiloxan, α,ω-Dihydrogen-polydimethylsiloxane, Poly(methylhydrogen)siloxane, α,ω Dialkoxypolydimethylsiloxane oder α,ω-Divinylpoly-dimethylsiloxane eingesetzt werden.

Ein entscheidender Vorteil des erfindungsgemäßen Herstellprozesses liegt darin, dass man die im ersten Schritt angestrebte Synthese von Mischungen zyklischer-verzweigter Siloxane ohne funktionelle Gruppen unter verschärften Reaktionsbedingungen wie etwa einer hohen Säurekonzentration und hohen Temperaturen ohne Produktschädigung durchführen kann, da keinerlei empfindliche Gruppierungen (wie z.B. SiH-Funktionen) zugegen sind. Hierdurch gelingt ein optimaler Einbau von Verzweigungseinheiten (T-Strukturen) in die molekularen Gerüste der Siloxanoligomeren, bei dem die T-Strukturen idealer Weise jeweils durch D-Einheiten getrennt und nicht domänenartig kumuliert vorliegen, was die ²⁹Si-NMR-Spektroskopie insbesondere im Verschiebungsbereich der T-Strukturen nahelegt.

Die gaschromatographische Analyse zeigt, dass in den Äquilibraten typischerweise einfache Siloxancyclen wie D₄ (Octamethylcyclotetrasiloxan), D₅ (Dekamethylcyclopentasiloxan) und D₆ (Dodekamethylcyclohexasiloxan) nur in Gewichtsanteilen von kleiner 10% zugegen sind.

Falls für die spätere jeweilige Anwendung gewünscht (zum Beispiel im Rahmen der VOC-Diskussion (VOC = Volatile Organic Compounds) oder des Anti-Foggings), können diese Siloxancyclen durch einfache Destillation abgetrennt und rezykliert werden.

Andererseits sind die im Rahmen des erfinderischen Verfahrens gewählten thermischen Reaktionsbedingungen verglichen mit den in der Literatur beschriebenen Spitzentemperaturen von bis zu 600°C äußerst moderat zu nennen.

Erhalten werden die zyklischen-verzweigten Siloxane vom D/T-Typ in nahezu quantitativen Ausbeuten jeweils bezogen auf eingesetztes Trialkoxysilan.

Dem Fachmann ohne Weiteres verständlich, eignen sich die aus dem zweiten Schritt durch saure Äquilibrierung gewonnenen verzweigten, organomodifizierten Siloxane als Ausgangsmaterial zur Herstellung von Stabilisatoren für PUR-Schäume, zur Herstellung von Entschäumern, zur Herstellung von Lackadditiven, zur Herstellung von Emulgatoren, insbesondere von kosmetischen Emulgatoren, zur Herstellung kosmetischer Conditioner, zur Herstellung von Entlüftern, zur Herstellung von Dismulgatoren, zur Herstellung von Textilausrüstungsmitteln, zur Herstellung von Bautenschutzadditiven, zur Herstellung von Kunstoffadditiven, insbesondere Anti-Scratch-Additiven,zur Herstellung von Antifouling-Additiven bzw. -Beschichtungen und zur Herstellung von Anti-Icing-Beschichtungen. Die demgemäße Verwendung ist ein weiterer Gegenstand der vorliegenden Erfindung.

In Abhängigkeit von der im zweiten Schritt eingebauten Funktionalität (z.B. SiH-Gruppe (s. Beispiel 6) oder SiCl-Gruppe (s. Beispiel 10)) werden für alle diese vorgenannten Anwendungen nach Auswahl geeigneter Reaktionspartner SiC-verknüpfte Finalprodukte via Hydrosilylierung, oder aber SiOCverknüpfte Finalprodukte via dehydrogenativer SiOC-Verknüpfung oder Kondensation nach den bekannten Verfahren der Siliconechemie zugänglich.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard [δ(²⁹Si) = 0,0 ppm] gemessen.

Die Bestimmung der gewichtsmittleren Molmasse M_{w} und der Molmassenverteilung M_{w}/ Mₙ erfolgt im Rahmen dieser Erfindung an einem EcoSEC GPC/SEC-Gerät der Firma TOSOH Bioscience GmbH durch Gel-Permeations-Chromatographie aus toluolischen Lösungen der Siloxane. Verwendet wird eine Micro SDV 1000/10000-Säule von 55,00 cm Länge kombiniert mit einem EcoSEC RI-Detektor (dual flow refractive index detection). Der Polystyrol-Standard deckt den Molmassenbereich von 162 g/mol bis 2520000 g/mol ab.

### Beispiele

1) Herstellung eines zyklischen-verzweigten Siloxans mit einem angestrebten D-/T-Verhältnis von 8 : 1 (erfindungsgemäß)
   In einem 500-ml-Vierhalsrundkolben mit KPG-Rührer und aufgesetztem Rückflusskühler werden 40,5 g (0,227 mol) Methyltriethoxysilan zusammen mit 134,5 g (0,363 mol) Dekamethylcyclopentasiloxan in 200 ml Toluol unter Rühren auf 60°C erwärmt, mit 0,375 g Trifluormethansulfonsäure beaufschlagt und 4 Stunden lang äquilibriert. Dann werden 12,3 g Wasser sowie 3,1 g Ethanol hinzugefügt und der Ansatz wird für weitere 4 Stunden bei ca. 80°C auf Rückflusstemperatur erhitzt. Man tauscht den Rückflusskühler gegen eine Destillationsbrücke aus und destilliert innerhalb der folgenden Stunde die bis 100°C flüchtigen Bestandteile ab. Dann ersetzt man die Destillationsbrücke durch den Rückflusskühler und fügt dem Ansatz 6,15 g Wasser sowie 1,5 g Ethanol hinzu und lässt eine weitere Stunde sieden. Der Rückflusskühler wird sodann nochmals durch eine Destillationsbrücke ersetzt und man trennt im Laufe der nächsten Stunde die bis 100°C flüchtigen Bestandteile ab. Der auf 60°C abgekühlte Ansatz wird mit 4 m-% Natriumhydrogencarbonat versetzt, eine halbe Stunde gerührt, dann wird das Salz mit Hilfe eines Faltenfilters von der Flüssigphase abgetrennt. Man destilliert bei 70°C und einem Druck von < 1mbar an einem Rotationsverdampfer die Flüchtigen ab und isoliert eine farblose, leichtbewegliche Flüssigkeit deren ²⁹Si-NMR-Spektrum ein D-/T-Verhältnis von 7,62 : 1 (angestrebt 8 : 1) zuweist.
   Das GPC weist eine breite Molmassenverteilung auf, gekennzeichnet durch M_{w} = 70317 g/ mol; Mₙ: 1941 g/ mol und M_{w}/ Mₙ = 36,24.
2) Herstellung eines zyklischen-verzweigten Siloxans mit einem angestrebten D-/T-Verhältnis von 6 : 1 (erfindungsgemäß)
   Analog zu Beispiel 1 werden in einem 500-ml-Vierhalsrundkolben mit KPG-Rührer und aufgesetztem Rückflusskühler 52,2 g (0,293 mol) Methyltriethoxysilan zusammen mit 130,3 g (0,351 mol) Dekamethylcyclopentasiloxan in 200 ml Toluol unter Rühren auf 60°C erwärmt, mit 0,400 g Trifluormethansulfonsäure beaufschlagt und 4 Stunden lang äquilibriert. Dann werden 15,8 g Wasser sowie 4,0 g Ethanol hinzugefügt und der Ansatz wird für weitere 4 Stunden bei ca. 80°C auf Rückflusstemperatur erhitzt. Man tauscht den Rückflusskühler gegen eine Destillationsbrücke aus und destilliert innerhalb der folgenden Stunde die bis 100°C flüchtigen Bestandteile ab. Dann ersetzt man die Destillationsbrücke durch einen Rückflusskühler und fügt dem Ansatz 7,90 g Wasser sowie 2,0 g Ethanol hinzu und lässt eine weitere Stunde sieden. Der Rückflusskühler wird sodann nochmals durch eine Destillationsbrücke ersetzt und man trennt im Laufe der nächsten Stunde die bis 100°C flüchtigen Bestandteile ab. Der auf 60°C abgekühlte Ansatz wird mit 4 m-% Natriumhydrogencarbonat versetzt, eine halbe Stunde gerührt, dann wird das Salz mit Hilfe eines Faltenfilters von der Flüssigphase abgetrennt. Man destilliert bei 70°C und einem Druck von < 1mbar an einem Rotationsverdampfer die Flüchtigen ab und isoliert eine farblose, leichtbewegliche Flüssigkeit deren ²⁹Si-NMR-Spektrum ein D-/T-Verhältnis von 5,85 : 1 (angestrebt 6 : 1) zuweist.
3) Herstellung einer größeren Menge eines zyklischen-verzweigten Siloxans mit einem angestrebten D-/ T-Verhältnis von 6 : 1 (erfindungsgemäß)
   In einem 4000-ml-Vierhalsrundkolben mit KPG-Rührer und aufgesetztem Rückflusskühler werden 261,0 g (1,46 mol) Methyltriethoxysilan zusammen mit 652,5 g (1,76 mol) Dekamethylcyclopentasiloxan und 200 ml Toluol unter Rühren auf 60°C erwärmt, mit 1,983 g Trifluormethansulfonsäure beaufschlagt und 4 Stunden lang äquilibriert. Dann werden 79,0 g Wasser sowie 19,75 g Ethanol hinzugefügt und der Ansatz wird für weitere 4 Stunden bei ca. 80°C auf Rückflusstemperatur erhitzt. Man tauscht den Rückflusskühler gegen eine Destillationsbrücke aus und destilliert innerhalb der folgenden Stunde die bis 100°C flüchtigen Bestandteile ab. Dann ersetzt man die Destillationsbrücke durch einen Rückflusskühler und fügt dem Ansatz 26,30 g Wasser sowie 6,6 g Ethanol hinzu und lässt eine weitere Stunde sieden. Der Rückflusskühler wird sodann nochmals durch eine Destillationsbrücke ersetzt und man trennt im Laufe der nächsten Stunde die bis 100°C flüchtigen Bestandteile ab. Der auf 60°C abgekühlte Ansatz wird mit 4 m-% Natriumhydrogencarbonat versetzt, eine halbe Stunde gerührt, dann wird das Salz mit Hilfe eines Faltenfilters von der Flüssigphase abgetrennt. Man destilliert bei 70°C und einem Druck von < 1mbar an einem Rotationsverdampfer die Flüchtigen ab und isoliert eine farblose, leichtbewegliche Flüssigkeit, der das zugehörige ²⁹Si-NMR-Spektrum ein D-/T-Verhältnis von
   5,74 : 1 (angestrebt 6 : 1) zuweist. Die dynamische Viskosität beträgt 598 mPas bei 25°C. Das GC zeigt Restgehalte von D₄ = 3,2%, D₅ = 3,9% und D₆ =1,4%.
   Das GPC weist eine breite Molmassenverteilung auf, gekennzeichnet durch M_{w} = 91965 g/ mol; Mₙ: 2214 g/ mol und M_{w}/ Mₙ = 41,54.
4) Herstellung eines zyklischen-verzweigten Siloxans mit einem angestrebten D-/ T-Verhältnis von 4 : 1 (nicht angepasste Lösemittelmenge)
   Analog zu Beispiel 1 werden in einem 500-ml-Vierhalsrundkolben mit KPG-Rührer und aufgesetztem Rückflusskühler 73,5 g (0,412 mol) Methyltriethoxysilan zusammen mit 122,3 g (0,33 mol) Dekamethylcyclopentasiloxan in 220 ml Toluol unter Rühren auf 60°C erwärmt, mit 0,436 g Trifluormethansulfonsäure beaufschlagt und 4 Stunden lang äquilibriert. Dann werden 22,3 g Wasser sowie 5,6 g Ethanol hinzugefügt und der Ansatz wird für weitere 4 Stunden bei ca. 80°C auf Rückflusstemperatur erhitzt. Man tauscht den Rückflusskühler gegen eine Destillationsbrücke aus und destilliert innerhalb der folgenden Stunde die bis 100°C flüchtigen Bestandteile ab. Dann ersetzt man die Destillationsbrücke durch einen Rückflusskühler und fügt dem Ansatz 7,50 g Wasser sowie 1,9 g Ethanol hinzu und lässt eine weitere Stunde sieden. Der Rückflusskühler wird sodann nochmals durch eine Destillationsbrücke ersetzt. Im Laufe der folgenden Destillation steigt die Viskosität des Sumpfes derartig stark an, dass die Siliconmasse vergelt und verworfen wird.
5) Herstellung eines zyklischen-verzweigten Siloxans mit einem angestrebten D-/ T-Verhältnis von 4 : 1 (erfindungsgemäß, angepasste Lösemittelmenge von 1 : 3)
   Analog zu Beispiel 1 werden in einem 500-ml-Vierhalsrundkolben mit KPG-Rührer und aufgesetztem Rückflusskühler 36,8 g (0,206 mol) Methyltriethoxysilan zusammen mit 61,2 g (0,165 mol) Dekamethylcyclopentasiloxan in 330 ml Toluol unter Rühren auf 60°C erwärmt, mit 0,218 g Trifluormethansulfonsäure beaufschlagt und 4 Stunden lang äquilibriert. Dann werden 11,2 g Wasser sowie 2,8 g Ethanol hinzugefügt und der Ansatz wird für weitere 4 Stunden bei ca. 80°C auf Rückflusstemperatur erhitzt. Man tauscht den Rückflusskühler gegen eine Destillationsbrücke aus und destilliert innerhalb der folgenden Stunde die bis 100°C flüchtigen Bestandteile ab. Dann ersetzt man die Destillationsbrücke durch einen Rückflusskühler und fügt dem Ansatz 2,70 g Wasser sowie 0,9 g Ethanol hinzu und lässt eine weitere Stunde sieden. Der Rückflusskühler wird sodann nochmals durch eine Destillationsbrücke ersetzt und man trennt im Laufe der nächsten Stunde die bis 100°C flüchtigen Bestandteile ab. Der auf 60°C abgekühlte Ansatz wird mit 4 m-% Natriumhydrogencarbonat versetzt, eine halbe Stunde gerührt, dann wird das Salz mit Hilfe eines Faltenfilters von der Flüssigphase abgetrennt. Man destilliert bei 70°C und einem Druck von < 1mbar an einem Rotationsverdampfer die Flüchtigen ab und isoliert eine farblose, leichtbewegliche Flüssigkeit deren ²⁹Si-NMR-Spektrum ein D-/T-Verhältnis von 3,6 : 1 (angestrebt 4 : 1) zuweist.
   Das GPC weist eine Molmassenverteilung auf, die gekennzeichnet ist durch M_{w} = 12344 g/ mol; Mₙ: 3245 g/ mol und M_{w}/ Mₙ = 2,63.
6) Herstellung eines verzweigten, terminale SiH-Funktionen aufweisenden Wasserstoffsiloxans aus dem in Beispiel 1 hergestellten zyklischen-verzweigten Siloxan mit α,ω-Dihydrogenpolydimethylsiloxan und Dekamethylcyclopentasiloxan
   37,4 g des in Beispiel 1 hergestellten zyklischen-verzweigten Siloxans werden zusammen mit 6,3 g eines α,ω-Dihydrogenpolydimethylsiloxans (SiH-Wert: 2,90 Val/kg) und 186,3 g Dekamethylcyclopentasiloxan unter Zufügen von 0,25 g Trifluormethansulfonsäure (0,1 m-% bezogen auf den Gesamtansatz) in einem 500-ml-Vierhalskolben mit KPG-Rührer und aufgesetztem Rückflußkühler für 6 Stunden auf 40°C erhitzt und dann mit 5 g Natriumhydrogencarbonat versetzt und 30 Minuten nachgerührt. Man trennt mit Hilfe einer Filterpresse (Seitz K 300-Filterscheibe) das Salz vom Äquilibrat ab.
   Erhalten wird ein farbloses verzweigtes Wasserstoffsiloxan mit Dimethylhydrogensiloxy-Funktionen in seinen Termini (SiH-Wert: 0,30 Val/kg). Das zugehörige ²⁹Si-NMR-Spektrum belegt die Zielstruktur.
7) Herstellung eines verzweigten, terminale Ethoxy-Funktionen aufweisenden Siloxans (erfindungsgemäß)
   114,8 g des in Beispiel 2 hergestellten zyklischen-verzweigten Siloxans werden zusammen mit 33,9 g Dimethyldiethoxysilan und 101,1 g Dekamethylcyclopentasiloxan unter Zufügen von 0,25 g Trifluormethansulfonsäure (0,1 m-% bezogen auf den Gesamtansatz) in einem 500-ml-Vierhalskolben mit KPG-Rührer und aufgesetztem Rückflusskühler für 6 Stunden auf 60°C erhitzt und dann mit 5 g Natriumhydrogencarbonat versetzt und 30 Minuten nachgerührt. Man trennt mit Hilfe einer Filterpresse (Seitz K 300-Filterscheibe) das Salz vom Äquilibrat ab.
   Das zugehörige ²⁹Si-NMR-Spektrum belegt die Zielstruktur.
8) Herstellung eines verzweigten, terminale Vinyl-Funktionen aufweisenden Siloxans (erfindungsgemäß)
   109,2 g des in Beispiel 3 hergestellten zyklischen-verzweigten Siloxans werden zusammen mit 41,3 g Divinyltetramethyldisiloxan und 99,5 g Dekamethylcyclopentasiloxan unter Zufügen von 0,25 g Trifluormethansulfonsäure (0,1 m-% bezogen auf den Gesamtansatz) in einem 500-ml-Vierhalskolben mit KPG-Rührer und aufgesetztem Rückflusskühler für 6 Stunden auf 60°C erhitzt und dann mit 5 g Natriumhydrogencarbonat versetzt und 30 Minuten nachgerührt. Man trennt mit Hilfe einer Filterpresse (Seitz K 300-Filterscheibe) das Salz vom Äquilibrat ab.
   Das zugehörige ²⁹Si-NMR-Spektrum sichert als Zielstruktur ein verzweigtes, terminale Vinylfunktionen tragendes Siloxan.
9) Herstellung eines verzweigten Silikonöls (erfindungsgemäß)
   111,6 g des in Beispiel 3 hergestellten zyklischen-verzweigten Siloxans werden zusammen mit 36,7 g Hexamethyldisiloxan und 101,7 g Dekamethylcyclopentasiloxan unter Zufügen von 0,25 g Trifluormethansulfonsäure (0,1 m-% bezogen auf den Gesamtansatz) in einem 500-ml-Vierhalskolben mit KPG-Rührer und aufgesetztem Rückflusskühler für 6 Stunden auf 60°C erhitzt und dann mit 5 g Natriumhydrogencarbonat versetzt und 30 Minuten nachgerührt.. Man trennt mit Hilfe einer Filterpresse (Seitz K 300-Filterscheibe) das Salz vom Äquilibrat ab.
   Das zugehörige ²⁹Si-NMR-Spektrum sichert als Zielstruktur ein verzweigtes, nicht-funktionelles Silikonöl.
10) Herstellung eines verzweigten, terminale Chlor-Funktionen aufweisenden sulfatoverbrückten Siloxans (Chlorsiloxanylsulfat, erfindungsgemäß)
   a) Herstellung einer linearen Chlorsiloxanylsulfat-Vorstufe
      In einem 500-ml-Vierhalsrundkolben mit KPG-Rührer, Innenthermometer und aufgesetztem Rückflusskühler werden 105,4 g eines α,ω-Dichlorpolydimethylsiloxans der mittleren Kettenlänge N = 5,5 zusammen mit 28,2 g Dekamethylcyclopentasiloxan unter Rühren vorgelegt und mit 5,6 g konzentrierter Schwefelsäure versetzt. Man lässt den Ansatz eine Stunde bei 50°C und danach 2 Stunden bei 100°C reagieren. Nach Abkühlen auf 20°C wird eine farblos klare Flüssigkeit erhalten.
   b) Äquilibrierung der unter a)gewonnenen Vorstufe mit D/T-Cyclen
      110,8 g eines in Analogie zum Beispiel 2 hergestellten D/T-Siloxans mit einem nach ²⁹Si-NMR-Spektroskopie ermittelten D/T-Verhältnis von 5,63 : 1 werden innerhalb von 5 Minuten der unter a) gewonnenen Vorstufe unter Rühren hinzugefügt.
      Die Äquilibrierung erfolgt unter intensivem Rühren der Reaktanden für 30 Minuten bei 22°C, dann für 1 Stunde bei 50°C und für 6 Stunden bei 100°C.
      Unter Anlegen eines Hilfsvakuums von 1 mbar werden über einen Zeitraum von 2 Stunden hinweg bei 50°C flüchtige Bestandteile entfernt. Nach Erkalten des Sumpfes wird eine wasserklare, farblose Flüssigkeit mit einem Säurewert von 1,82 mmol Säure/ g Substanz (theoretisch: 1,853 mmol Säure/ g Substanz) isoliert. ²⁹Si-NMR-Spektroskopie sichert die angestrebte Struktur.

## Patentansprüche

1. Mischungen zyklischer-verzweigter, ausschließlich D- und T-Einheiten aufweisender Siloxane ohne funktionelle Gruppen mit der Maßgabe, dass der mit ²⁹Si-NMR-Spektroskopie gemäß der Beschreibung bestimmbare summarische Anteil der in der Siloxanmatrix vorhandenen D- und T-Einheiten, die Si-Alkoxy- und/oder SiOH-Gruppen aufweisen, ≤ 2 Molprozent ist.

2. Mischungen zyklischer-verzweigter, ausschließlich D- und T-Einheiten aufweisender Siloxane gemäß Anspruch 1, wobei das Verhältnis von D- zu T-Einheiten zwischen 10 : 1 und 3 : 1, bevorzugt zwischen 6 : 1 und 4 : 1 liegt.

3. Mischungen zyklischer-verzweigter, ausschließlich D- und T-Einheiten aufweisender Siloxane gemäß Anspruch 1 oder 2, wobei das gemäß der Beschreibung bestimmte Molmassenverhältnis der Mischung M_{w}/Mₙ im Bereich 2 < Mw/Mn < 50 liegt.

4. Mischungen zyklischer-verzweigter, ausschließlich D- und T-Einheiten aufweisender Siloxane gemäß einem der Ansprüche 1 bis 3 wobei sich die verzweigende T-Einheit von Alkyltrialkoxysilanen und/oder Phenyltrialkoxysilanen herleitet.

5. Mischungen zyklischer-verzweigter, ausschließlich D- und T-Einheiten aufweisender Siloxane gemäß einem der Ansprüche 1 bis 4 wobei sich die verzweigende T-Einheit von Methyltriethoxysilan herleitet.

6. Verfahren zur Herstellung von Mischungen zyklischer-verzweigter, ausschließlich D- und T-Einheiten aufweisender Siloxane, gemäß einem der Ansprüche 1 bis 5, **dadurch gekennzeichnet, dass** ein Trialkoxysilan in einem Lösemittel mit Siloxancyclen und/oder α,ω-Dihydroxy-polydimethylsiloxan unter Zugabe von Wasser und in Anwesenheit von mindestens einem sauren Katalysator umgesetzt wird,
wobei als Lösungsmittel ein inertes, mit Wasser nichtmischbares Silicium-freies Lösungsmittel aus der Gruppe umfassend die isomeren Xylole, Alkylaromaten, wie vorzugsweise Toluol und/oder Cycloaliphaten, wie vorzugsweise Cyclohexan, und/oder Ethylcarbonat eingesetzt wird.

7. Verfahren nach Anspruch 6, **dadurch gekennzeichnet, dass** das Lösungsmittel in Massenverhältnissen von Lösemittel zum Siloxan von 1:1 bis 5:1 eingesetzt wird.

8. Verfahren nach Anspruch 6 oder 7, **dadurch gekennzeichnet, dass** als saurer Katalysator
(a) para-Toluolsulfonsäure, Trifluormethansulfonsäure, Trichloressigsäure, Schwefelsäure, Perchlorsäure, Phosphorsäure und/oder Hexafluorphosphorsäure eingesetzt werden, vorzugsweise in Mengen von 0,1 bis 2,0 Gewichtsprozent, besonders bevorzugt in Mengen von 0,15 bis 1,0 Gewichtsprozent, jeweils bezogen auf den Silicium enthaltenden Anteil der Reaktionsmatrix,
oder
(b) ein sulfonsaures, makrovernetztes lonenaustauscherharz, vorzugsweise in Mengen von 1,0 bis 10,0 Gewichtsprozent, besonders bevorzugt in Mengen von 2,0 bis 6,0 Gewichtsprozent jeweils bezogen auf den Silicium enthaltenden Anteil der Reaktionsmatrix
eingesetzt wird.

9. Verfahren nach einem der Ansprüche 6 bis 8, **dadurch gekennzeichnet, dass** die Umsetzung bei Temperaturen im Bereich von 10°C bis 150°C, vorzugsweise 20°C bis 120°C, insbesondere von 40°C bis 110°C durchgeführt wird.

10. Verfahren nach einem der Ansprüche 6 bis 9, **dadurch gekennzeichnet, dass** ein mindestens 100%-iger H₂O-Überschuss bezogen auf die zu kondensierenden Gruppen eingesetzt wird.

11. Verfahren nach einem der Ansprüche 6 bis 10, **dadurch gekennzeichnet, dass** die Umsetzung einen Voräquilibrierschritt bei Temperaturen von T>40°C umfasst, gefolgt von einer durch Wasserzugabe eingeleiteten Kondensation bei Temperaturen von T>60°C, wobei die Wasserzugabe in einer Portion, in mehreren Portionen oder fortlaufend erfolgt.

12. Verfahren zur Herstellung verzweigter, organomodifizierter Siloxane, **dadurch gekennzeichnet, dass**
in einem ersten Schritt Mischungen zyklischer-verzweigter Siloxane bereitgestellt werden, gemäß einem der Ansprüche 1 bis 5,
und
in einem zweiten Schritt die Mischungen zyklischer-verzweigter Siloxane mit Silanen und/oder Siloxanen sauer äquilibriert werden.

13. Verfahren nach Anspruch 12, **dadurch gekennzeichnet, dass** als Silane und/oder Siloxane alle sauer äquilibrierbaren Siliciumverbindungen eingesetzt werden, wobei als Silane insbesondere, Diethoxydimethylsilan, Trimethylalkoxysilane oder Dimethyldichlorsilan eingesetzt werden, und wobei als Siloxane insbesondere Tetramethyldisiloxan, α,ω-Dihydrogen-polydimethylsiloxane, Poly(methylhydrogen)siloxane, α,ω-Dialkoxypolydimethylsiloxane oder α,ω-Divinylpolydimethylsiloxane eingesetzt werden.

14. Verfahren zur Herstellung verzweigter Silikonöle, **dadurch gekennzeichnet, dass** in einem ersten Schritt Mischungen zyklischer-verzweigter Siloxane bereitgestellt werden, gemäß einem der Ansprüche 1 bis 5,
und in einem zweiten Schritt die zyklischen-verzweigten Siloxane mit Polydimethylsiloxanen oder Hexamethyldisiloxan umgesetzt werden.

15. Verwendung verzweigter, organomodifizierter Siloxane, erhältlich nach Anspruch 12 oder 13, als Ausgangsmaterial
zur Herstellung von Stabilisatoren für Polyurethan-Schäume,
zur Herstellung von Entschäumern,
zur Herstellung von Lackadditiven,
zur Herstellung von Emulgatoren, insbesondere von kosmetischen Emulgatoren,
zur Herstellung kosmetischer Conditioner,
zur Herstellung von Entlüftern,
zur Herstellung von Dismulgatoren,
zur Herstellung von Textilausrüstungsmitteln,
zur Herstellung von Bautenschutzadditiven,
zur Herstellung von Kunstoffadditiven, insbesondere Anti-Scratch-Additiven,
zur Herstellung von Antifouling-Additiven bzw. -Beschichtungen,
zur Herstellung von Anti-lcing-Beschichtungen.

## Claims

1. Mixtures of cyclic branched siloxanes having exclusively D and T units and having no functional groups, with the proviso that the cumulative proportion of the D and T units having Si-alkoxy and/or SiOH groups that are present in the siloxane matrix; determinable according to the description by ²⁹Si NMR spectroscopy, is ≤ 2 mole per cent.

2. Mixtures of cyclic branched siloxanes having exclusively D and T units according to Claim 1, wherein the ratio of D to T units is between 10:1 and 3:1, preferably between 6:1 and 4:1.

3. Mixtures of cyclic branched siloxanes having exclusively D and T units according to Claim 1 or 2, wherein the molar mass ratio, determined according to the description, of the mixture M_{w}/Mₙ is in the range of 2 < M_{w}/Mₙ < 50.

4. Mixtures of cyclic branched siloxanes having exclusively D and T units according to any of Claims 1 to 3, wherein the branching T unit derives from alkyltrialkoxysilanes and/or phenyltrialkoxysilanes.

5. Mixtures of cyclic branched siloxanes having exclusively D and T units according to any of Claims 1 to 4, wherein the branching T unit derives from methyltriethoxysilane.

6. Process for preparing mixtures of cyclic branched siloxanes having exclusively D and T units, according to any of Claims 1 to 5, **characterized in that** a trialkoxysilane in a solvent is reacted with siloxane cycles and/or α,ω-dihydroxypolydimethylsiloxane with addition of water and in the presence of at least one acidic catalyst, wherein the solvent used is an inert water-immiscible silicon-free solvent from the group comprising the isomeric xylenes, alkylaromatics such as preferably toluene and/or cycloaliphatics such as preferably cyclohexane, and/or ethyl carbonate.

7. Process according to Claim 6, **characterized in that** the solvent is used in mass ratios of solvent to the siloxane of 1:1 to 5:1.

8. Process according to Claim 6 or 7, **characterized in that** the acidic catalyst used is
(a) para-toluenesulfonic acid, trifluoromethanesulfonic acid, trichloroacetic acid, sulfuric acid, perchloric acid, phosphoric acid and/or hexafluorophosphoric acid, preferably in amounts of 0.1 to 2.0 per cent by weight, more preferably in amounts of 0.15 to 1.0 per cent by weight, based in each case on the silicon-containing component of the reaction matrix,
or
(b) a macrocrosslinked ion exchange resin containing sulfonic acid groups, preferably in amounts of 1.0 to 10.0 per cent by weight, more preferably in amounts of 2.0 to 6.0 per cent by weight, based in each case on the silicon-containing component of the reaction matrix.

9. Process according to any of Claims 6 to 8, **characterized in that** the reaction is conducted at temperatures in the range from 10°C to 150°C, preferably 20°C to 120°C, especially from 40°C to 110°C.

10. Process according to any of Claims 6 to 9, **characterized in that** at least 100% H₂O excess is used, based on the groups to be condensed.

11. Process according to any of Claims 6 to 10, **characterized in that** the reaction comprises a preliminary equilibration step at temperatures of T > 40°C, followed by a condensation initiated by addition of water at temperatures of T > 60°C, where the water is added in one portion, in several portions or continuously.

12. Process for preparing branched organomodified siloxanes, **characterized in that**
in a first step mixtures of cyclic branched siloxanes are provided, according to any of Claims 1 to 5,
and
in a second step the mixtures of cyclic branched siloxanes are equilibrated under acidic conditions with silanes and/or siloxanes.

13. Process according to Claim 12, **characterized in that** the silanes and/or siloxanes used are any acid-equilibratable silicon compounds, the silanes used especially being diethoxydimethylsilane, trimethylalkoxysilane or dimethyldichlorosilane, and the siloxanes used especially being tetramethyldisiloxane, α,ω-dihydropolydimethylsiloxanes, poly(methylhydro)siloxanes, α,ω-dialkoxypolydimethylsiloxanes or α,ω-divinylpolydimethylsiloxanes.

14. Process for preparing branched silicone oils, **characterized in that** in a first step mixtures of cyclic branched siloxanes are provided, according to any of Claims 1 to 5,
and in a second step the cyclic branched siloxanes are reacted with polydimethylsiloxanes or hexamethyldisiloxane.

15. Use of branched organomodified siloxanes, obtainable according to Claim 12 or 13, as starting material
for production of stabilizers for polyurethane foams,
for production of defoamers,
for production of paint additives,
for production of emulsifiers, especially of cosmetic emulsifiers,
for production of cosmetic conditioners,
for production of deaerating agents,
for production of demulsifiers,
for production of textile finishes,
for production of building protection additives,
for production of polymer additives, especially anti-scratch additives,
for production of anti-fouling additives or coatings,
for production of anti-icing coatings.

## Revendications

1. Mélanges de siloxanes cycliques ramifiés, comprenant exclusivement des unités D et T, sans groupes fonctionnels, à condition que la proportion globale d'unités D et T présentes dans la matrice de siloxane qui comprennent des groupes Si-alcoxy et/ou SiOH, déterminable par spectroscopie RMN-²⁹Si selon la description, soit ≤ 2 pour cent en moles.

2. Mélanges de siloxanes cycliques ramifiés, comprenant exclusivement des unités D et T, selon la revendication 1, dans lesquels le rapport entre les unités D et T est compris entre 10:1 et 3:1, de préférence entre 6:1 et 4:1.

3. Mélanges de siloxanes cycliques ramifiés, comprenant exclusivement des unités D et T, selon la revendication 1 ou 2, dans lesquels le rapport entre les masses molaires du mélange M_{w}/Mₙ déterminé selon la description se situe dans la plage 2 < M_{w}/Mₙ < 50.

4. Mélanges de siloxanes cycliques ramifiés, comprenant exclusivement des unités D et T, selon l'une quelconque des revendications 1 à 3, dans lesquels l'unité T ramifiante est dérivée d'alkyltrialcoxysilanes et/ou de phényltrialcoxysilanes.

5. Mélanges de siloxanes cycliques ramifiés, comprenant exclusivement des unités D et T, selon l'une quelconque des revendications 1 à 4, dans lesquels l'unité T ramifiante est dérivée de méthyltriéthoxysilane.

6. Procédé de fabrication de mélanges de siloxanes cycliques ramifiés, comprenant exclusivement des unités D et T, selon l'une quelconque des revendications 1 à 5, **caractérisé en ce qu'**un trialcoxysilane est mis en réaction dans un solvant avec des cycles siloxane et/ou du α,ω-dihydroxy-polydiméthylsiloxane avec ajout d'eau et en présence d'au moins un catalyseur acide,
un solvant sans silicium inerte non miscible avec l'eau du groupe comprenant les xylènes isomères, les composés aromatiques d'alkyle, tels que de préférence le toluène, et/ou les composés cycloaliphatiques, tels que de préférence le cyclohexane, et/ou le carbonate d'éthyle, étant utilisé en tant que solvant.

7. Procédé selon la revendication 6, **caractérisé en ce que** le solvant est utilisé en des rapports en masse entre le solvant et le siloxane de 1:1 à 5:1.

8. Procédé selon la revendication 6 ou 7, **caractérisé en ce qu'**en tant que catalyseur acide,
(a) de l'acide para-toluène-sulfonique, de l'acide trifluorométhane-sulfonique, de l'acide trichloroacétique, de l'acide sulfurique, de l'acide perchlorique, de l'acide phosphorique et/ou de l'acide hexafluorophosphorique sont utilisés, de préférence en quantités de 0,1 à 2,0 pour cent en poids, de manière particulièrement préféré en quantités de 0,15 à 1,0 pour cent en poids, à chaque fois par rapport à la fraction contenant du silicium de la matrice de réaction,
ou
(b) une résine échangeuse d'ions macroréticulée d'acide sulfonique est utilisée, de préférence en quantités de 1,0 à 10,0 pour cent en poids, de manière particulièrement préférée en quantités de 2,0 à 6,0 pour cent en poids, à chaque fois par rapport à la fraction contenant du silicium de la matrice de réaction.

9. Procédé selon l'une quelconque des revendications 6 à 8, **caractérisé en ce que** la réaction est réalisée à des températures dans la plage allant de 10 °C à 150 °C, de préférence de 20 °C à 120 °C, notamment de 40 °C à 110 °C.

10. Procédé selon l'une quelconque des revendications 6 à 9, **caractérisé en ce qu'**un excès d'au moins 100 % d'H₂O par rapport aux groupes à condenser est utilisé.

11. Procédé selon l'une quelconque des revendications 6 à 10, **caractérisé en ce que** la réaction comprend une étape de pré-équilibrage à des températures T > 40 °C, suivie par une condensation initiée par ajout d'eau à des températures T > 60 °C, l'ajout d'eau ayant lieu en une portion, en plusieurs portions ou en continu.

12. Procédé de fabrication de siloxanes ramifiés, organomodifiés, **caractérisé en ce que**
lors d'une première étape, des mélanges de siloxanes cycliques ramifiés sont préparés, selon l'une quelconque des revendications 1 à 5,
et
lors d'une deuxième étape, les mélanges de siloxanes cycliques ramifiés sont équilibrés en milieu acide avec des silanes et/ou des siloxanes.

13. Procédé selon la revendication 12, **caractérisé en ce que** tous les composés de silicium équilibrables en milieu acide sont utilisés en tant que silanes et/ou siloxanes, le diéthoxydiméthylsilane, les triméthylalcoxysilanes ou le diméthyldichlorosilane étant notamment utilisés en tant que silanes, et le tétraméthyldisiloxane, les α,ω-dihydrogénopolydiméthylsiloxanes, les poly(méthylhydrogéno)siloxanes, les α,ω-dialcoxypolydiméthylsiloxanes ou les α,ω-divinylpolydiméthylsiloxanes étant notamment utilisés en tant que siloxanes.

14. Procédé de fabrication d'huiles de silicone ramifiées, **caractérisé en ce que**, lors d'une première étape, des mélanges de siloxanes cycliques ramifiés sont préparés, selon l'une quelconque des revendications 1 à 5,
et lors d'une deuxième étape, les siloxanes cycliques ramifiés sont mis en réaction avec des polydiméthylsiloxanes ou de l'hexaméthyldisiloxane.

15. Utilisation de siloxanes ramifiés, organomodifiés, pouvant être obtenus selon la revendication 12 ou 13, en tant que matière première,
pour la fabrication de stabilisateurs pour mousses de polyuréthane,
pour la fabrication d'antimousses,
pour la fabrication d'additifs de vernis,
pour la fabrication d'émulsifiants, notamment d'émulsifiants cosmétiques,
pour la fabrications de conditionneurs cosmétiques,
pour la fabrication d'agents d'aération,
pour la fabrication de désémulsifiants,
pour la fabrication d'agents de traitement de textiles,
pour la fabrication d'additifs pour la protection de bâtiments,
pour la fabrication d'additifs de plastique, notamment d'additifs anti-éraflures,
pour la fabrication d'additifs ou de revêtements antisalissures,
pour la fabrication de revêtements antigel.
